(19) **Europäisches Patentamt**
**European Patent Office**
**Office européen des brevets**

(11) Publication number: **0 040 193**
**B1**

(12) **EUROPEAN PATENT SPECIFICATION**

(45) Date of publication of patent specification: **04.07.84**

(51) Int. Cl.³: **F 03 D 5/00**

(21) Application number: **80900506.9**

(22) Date of filing: **04.03.80**

(86) International application number:
**PCT/SE80/00063**

(87) International publication number:
**WO 81/01443 28.05.81 Gazette 81/13**

(54) **WIND ROTOR DEVICE.**

(30) Priority: **19.11.79 SE 7909537**

(43) Date of publication of application:
**25.11.81 Bulletin 81/47**

(45) Publication of the grant of the patent:
**04.07.84 Bulletin 84/27**

(84) Designated Contracting States:
**CH DE FR GB NL**

(56) References cited:
**DE - C - 187 865**
**FR - A - 2 295 259**
**US - A - 953 891**
**US - A - 974 995**

(73) Proprietor: **JOUTSINIEMI, Risto T.**
**Betel-Institutet Trunnavägen 28**
**S-794 00 Orsa (SE)**

(72) Inventor: **JOUTSINIEMI, Risto T.**
**Betel-Institutet Trunnavägen 28**
**S-794 00 Orsa (SE)**

(74) Representative: **Schmidt-Evers, Jürgen et al,**
**Patentanwälte Dipl.-Ing. H. Mitscherlich Dipl.-Ing.**
**K. Gunschmann Dipl.-Ing. Dr.rer.nat. W. Körber**
**Dipl.-Ing. J. Schmidt-Evers Dipl.-Ing. W. Melzer**
**Steinsdorfstrasse 10**
**D-8000 München 22 (DE)**

Courier Press, Leamington Spa, England.

## Description

The present invention concerns a wind rotor device for producing energy under particularly demanding conditions, where the wind velocity may vary considerably, for instance in Greenland and in the Sahara, areas in which conventional wind rotors have proved impracticable. By reinforcing such wind rotors they are made excessively heavy. The wind rotor device of the present invention is intended to operate at wind velocities from 3 m/s upward (Figs. 1 and 2), and it is also arranged to withstand wind velocities as high as 180 m/s (Figs. 3 and 4). It is so designed as to operate also in sandstorms such as occur daily in the Sahara and where the wind velocities may reach about 85 m/s. Owing to its simple design the wind rotor device is accordance with the present invention can also be used at very low temperatures, where it is, for instance, impossible to make use of hydraulic power transmission. Nor do high temperatures impede the operation of the design.

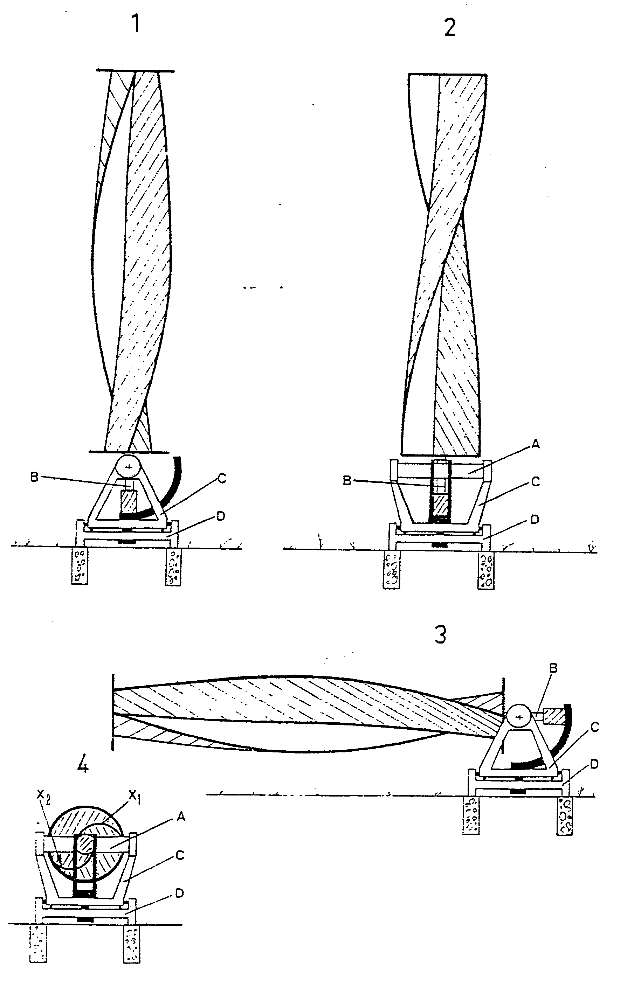

The device is principally intended for generating relatively small amounts of electrical energy under difficult conditions, where the use of large, energy-consuming plants is uneconomical. In view of its design, the wind rotor device rotates under all conditions, thus continuously meeting its task of producing energy, owing to the fact that it also rotates during displacement between the vertical (Figs. 1 and 2) and horizontal (Figs. 3 and 4) positions.

The following patents relate to the design and are associated with it:

U.S. Patent 4,112,311
Swedish Patent 65,940
German Patent 2,540,757.

The design of the present wind rotor device is closest to that described in Swedish patent 65,940 but with the decisive difference that the present wind rotor rotates also if the axis of rotation is located in the direction of the wind (Figs. 3 and 4). It is an improvement and further development of rotors based on the same wing idea.

The wings of the rotor may be assumed to be generated by halving a tube lengthwise i.e. about an axial plane, maintaining the halves together while twisting the ends of the tube relative to one another about the axis, and then displacing the halves such that their concave portions overlap. Every cross-section of the tube then exhibits two semi-circles X1, X2 of identical size.

The windscrew rotor rotates in the vertical position (Fig. 1 and 2) and moves steplessly into the horizontal position (Fig. 3) in the direction of the wind and subject to continuous rotation.

In the horizontal position the side facing the wind constitutes a circular surface (Fig. 4) which responds to the force of the wind over virtually its entire area.

In the vertical position (Fig. 1 and 2) the rotor always comprises a relatively large (Fig. 1) or two relatively small (Fig. 2) concave surface alternately turned into the wind so that the concave surface facing the wind is roughly uniform at all times. Also the convex surface facing the wind operates owing to an opening at the centre of the rotor. For the cross-section of the rotor shows that the two semi-circular parts X1 and X2 are displaced in relation to one another so that an opening is formed through which air can pass. The two wings X1 and X2 of the rotor are turned 180 degrees in relation to one another, from below upward and in the direction of rotation. As a result a greater part of the wind force is concentrated on the lower part of the rotor than on its upper part, which contributes to the strength of the design, and even in the loaded state the speed of the rotor corresponds to about 1.2 times the velocity of the wind.

The windscrew rotor is maintained in its vertical position by a spring installed in the tranverse shaft A of the frame C. The frame C is pivotably connected to a base D. As the force of the wind increases to values entailing dangerous loading of the wings X1 and X2 and the rotor shaft B, the rotor turns steplessly to the horizontal position in the direction of the wind (Figs. 3 and 4). Since it also rotates in this position, it can take advantage of even very large wind forces. The design offers the advantage of low production costs considering its efficiency under the conditions for which it is intended.

## Claims

1. A wind rotor device comprising

— a base (D),
— a frame (C) pivotably connected to the base (D),
— a rotor (X1, X2) comprising a pair of elongated wings (X1, X2) having an outer and an inner edge and a semicircular, cross-section and arranged in axial direction about a geometrical axis in a symmetrical fashion such that the concave sides of the wings (X1, X2) partially overlap each other, defining an axial passage between the inner edges of the wings (X1, X2),
— a shaft (B) extending in the direction of the geometrical axis and connecting one end of the rotor (X1, X2) to the frame (C), characterized in that
— the wings (X1, X2) are twisted in a screw-shaped manner in relation to one another,
— the shaft (B) is connected to the frame (C) in a pivotable manner, and
— means are provided for resiliently keeping the rotor (X1, X2) in a first axial direction in relation to the frame (C) but allowing the rotor (X1, X2) to pivot as a function of the wind strength acting on the rotor (X1, X2).

2. A device as claimed in Claim 1, characterized in that the wings (X1, X2) are twisted in relation to one another by substantially 180 degrees.

3. A device as claimed in Claim 1, characterized in that the shaft (B) is pivotable through an angle of substantially 90 degrees from its first axial direction.

4. A device as claimed in Claim 1, characterized in that the length of the rotor (X1, X2) is at least 4 times its diameter.

5. A device as claimed in Claim 1, characterized in that the means resiliently keeping the rotor (X1, X2) in the first axial direction is a spring.

## Patentansprüche

1. Windschraube mit einem Grundteil (D), mit einem Ständer (C), der mit dem Grundteil (D) schwenkbar verbunden ist, mit einem Rotor (X1, X2), der ein Paar längerlicher Flügel (X1, X2) aufweist, die eine Außenkante und eine Innenkante sowie einen halbkreisförmigen Querschnitt aufweisen und die in axialer Richtung um eine geometrische Achse in einer symmetrischen Weise derart angeordnet sind, daß die konkaven Flügelseiten teilweise jeweils einander überlappen und einen axialen Durchgang zwischen den inneren Flügelkanten festlegen, und mit einer Welle (B), die in der Richtung der geometrischen Achse verläuft und die Ende des Rotors (X1, X2) mit dem Ständer (C) verbindet, dadurch gekennzeichnet, daß die Flügel (X1, X2) in einer schraubenförmigen Weise relativ zueinander gewunden sind, daß die Welle (B) mit dem Ständer (C) in einer schwenkbaren Weise verbunden ist und daß Einrichtungen vorgesehen sind, welche den Rotor (X1, X2) in einer ersten axialen Richtung in bezug auf den Ständer (C) federnd festhalten, jedoch eine Schwenkung des betreffenden Rotors (X1, X2) in Abhängigkeit von der auf den Rotor (X1, X2) wirkenden Windstärke ermöglichen.

2. Windschraube nach Anspruch 1, dadurch gekennzeichnet, daß die Flügel (X1, X2) in bezug zueinander um im wesentlichen 180° gewunden sind.

3. Windschraube nach Anspruch 1, dadurch gekennzeichnet, daß die Welle (B) um einen Winkel von im wesentlichen 90° aus ihrer ersten axialen Richtung schwenkbar ist.

4. Windschraube nach Anspruch 1, dadurch gekennzeichnet, daß die Länge des Rotors (X1, X2) zumindest viermal dem Rotordurchmesser ist.

5. Windschraube nach Anspruch 1, dadurch gekennzeichnet, daß die den Rotor (X1, X2) in der ersten axialen Richtung federnd festhaltenden Einrichtungen durch eine Feder gebildet sind.

## Revendications

1. Hélice éolienne à rotor comprenant une base (D); un bâti (C) monté pivotant sur la base (D); un rotor (X1, X2) comprenant une paire de pales allongées (X1, X2) présentant des bords extérieur et intérieur et une section transversale semi-circulaire, disposées dans le sens axial autour d'un axe géométrique d'une façon symétrique telle que les côtés concaves des pales (X1, X2) se chevauchent mutuellement partiellement, définissant un passage axial entre les bords intérieures des pales (X1, X2); un arbre (B) s'étendant dans le sens de l'axe géométrique et reliant l'une des extrémités du rotor (X1, X2) au bâti (C), ladite hélice étant caractérisée en ce que les pales sont torsadées en forme de vis l'une par rapport à l'autre; en ce que l'arbre (B) est relié au bâti (C) de façon pivotante; et en ce que des moyens sont prévus pour maintenir élastiquement le rotor (X1, X2) dans une première direction axiale par rapport au bâti (C) tout en permettant au rotor (X1, X2) de pivoter en fonction de la force du vent qui agit sur le rotor (X1, X2).

2. Hélice suivant la revendication 1, caractérisée en ce que les pales (X1, X2) sont torsadées d'environ 180° l'une par rapport à l'autre.

3. Hélice suivant la revendication 1, caractérisée en ce que l'arbre (B) peut pivoter d'un angle d'environ 90° à partir de sa première direction axiale.

4. Hélice suivant la revendication 1, caractérisée en ce que la longueur du rotor (X1, X2) est au moins le quadruple de son diamètre.

5. Hélice suivant la revendication 1, caractérisée en ce que moyens pour maintenir élastiquement le rotor (X1, X2) dans sa première direction axiale sont constitués par un ressort.